# EUROPEAN PATENT APPLICATION

(11) **EP 4 350 046 A2**
(43) Date of publication of application: **10.04.2024**
(21) Application number: 23195663.2
(22) Date of filing: 06.09.2023
(51) Int. Cl.: C25B 1/04, C25B 11/03, C25B 11/053, C25B 15/08

(54) **ELECTRODE, MEMBRANE ELECTRODE ASSEMBLY, ELECTROCHEMICAL CELL, STACK, AND ELECTROLYZER**

(30) Priority: 03.10.2022 JP 2022159828
(71) Applicant: Kabushiki Kaisha Toshiba, Minato-ku Tokyo 105-0023 (JP); Toshiba Energy Systems & Solutions Corporation, Kawasaki-shi, Kanagawa 212-0013 (JP)
(72) Inventor: JUNG, Hyangmi, Tokyo (JP); FUKAZAWA, Taishi, Tokyo (JP); YOSHINAGA, Norihiro, Tokyo (JP); ONO, Akihiko, Tokyo (JP); SUGANO, Yoshitsune, Tokyo (JP); YAMAGIWA, Masakazu, Tokyo (JP); KUDO, Yuki, Tokyo (JP)
(74) Representative: Marks & Clerk LLP

(57) **Abstract**

An electrode according to an embodiment includes a support and a catalyst layer including a sheet layer and a gap layer stacked alternately. Cracks or/and holes exist in the catalyst layer.

## Description

### FIELD

The present embodiments relate to an electrode, a membrane electrode assembly, an electrochemical cell, a stack, and an electrolyzer.

### BACKGROUND

In recent years, electrochemical cells have been actively studied. Among electrochemical cells, for example, a polymer electrolyte membrane electrolysis cell (PEMEC) is expected to be used for hydrogen generation in a large-scale energy storage system. In order to ensure sufficient durability and electrolytic properties, platinum (Pt) nanoparticle catalysts are generally used for PEMEC cathodes, and noble metal catalysts such as iridium (Ir) nanoparticle catalysts are used for positive electrodes. Additionally, a method for obtaining hydrogen from ammonia is also considered. In addition, a method for obtaining organic material or carbon monoxide by electrolysis of carbon dioxide is also considered.

### BRIEF DESCRIPTION OF THE DRAWINGS

FIG. 1 is a schematic diagram of an embodiment according to an embodiment.
FIG. 2 is a schematic diagram of a catalyst layer according to an embodiment.
FIG. 3 is a schematic diagram of an embodiment according to an embodiment.
FIG. 4 shows analysis spots of an electrode according to an embodiment.
FIG. 5 is a schematic diagram of a member that a catalyst layer is provided on fibers according to an embodiment.
FIG. 6 is a schematic diagram of an embodiment according to an embodiment.
FIG. 7 is a schematic diagram of a membrane electrode assembly according to an embodiment.
FIG. 8 is a schematic diagram of an electrochemical cell according to an embodiment.
FIG. 9 is a schematic diagram of a stack according to an embodiment.
FIG. 10 is a conceptual diagram of an electrolyzer according to an embodiment.
FIG. 11 is a SEM image of an electrode of an example according to an embodiment.
FIG. 12 is a SEM image of an electrode of a comparative example according to an embodiment.
FIG. 13 is a SEM image of an electrode of a comparative example according to an embodiment.

### DETAILED DESCRIPTION

An electrode according to an embodiment includes a support and a catalyst layer including a sheet layer and a gap layer stacked alternately. Cracks or/and holes exist in the catalyst layer.

Hereinafter, the embodiments will be described with reference to the drawings.

It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

### (FIRST EMBODIMENT)

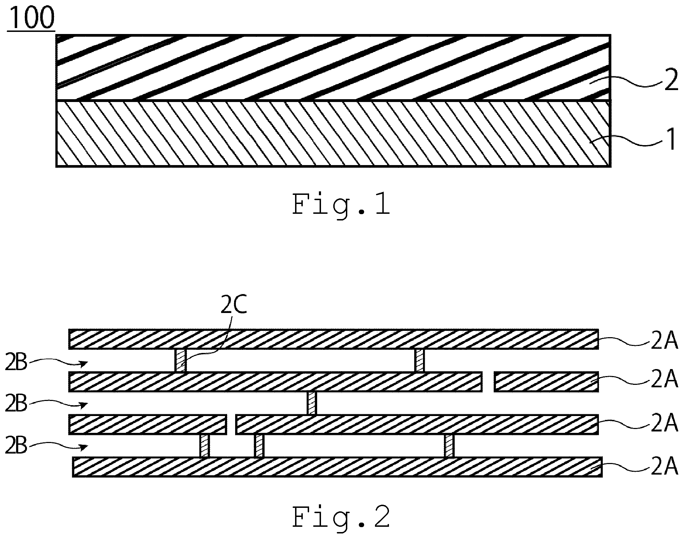

The first embodiment relates to an electrode. A cross-sectional schematic diagram of an electrode 100 according to the embodiment is shown in FIG. 1. The electrode 100 includes a support 1 and a catalyst layer 2. The catalyst layer 2 is used as a catalyst in electrode reactions for water electrolysis in the embodiments.

The electrode 100 according to the first embodiment is used as an anode for water electrolysis. When the catalyst layer 2 further includes a catalyst for a fuel cell, the electrode 100 can be also used as an oxygen electrode of a fuel cell. The electrode 100 according to embodiments can be used as an anode for producing ammonia by electrolysis. The electrode 100 according to embodiments can be used as an anode of an electrolyzer for synthesizing ammonia. Hereinafter, an example of water electrolysis is described in the second embodiment and the other embodiments. The electrode 100 according to embodiments can be also used for other than water electrolysis, for example, as an anode of a membrane electrode assembly for electrolysis of synthesizing ammonia so that ultrapure water is supplied to an anode, proton and oxygen is produced in the anode by decomposing water, the produced proton passes through an electrolyte membrane, and ammonia is synthesized by binging nitrogen provided to a cathode, protons, and electrons. The electrode 100 according to embodiments can be also used as a cathode for producing hydrogen by electrolyzing ammonia. The electrode 100 according to embodiments can be used as a cathode for a hydrogen generation apparatus. Hereinafter, an example of water electrolysis is described in the first embodiment and the other embodiments. The electrode 100 according to embodiments can be also used for other than water electrolysis, for example, as a cathode of a membrane electrode assembly for electrolysis of decomposing ammonia so that ammonia is supplied to a cathode, proton and nitrogen is produced in the cathode by decomposing ammonia, the produced proton passes through an electrolyte membrane, and hydrogen is synthesized by binging protons and electrons. The electrode 100 can be also used for an anode of an electrolyzer which electrolyze carbon dioxide to generate organic compounds such as methanol and ethylene and carbon monoxide.

A porous member having high conductivity is preferable for support 1. The support 1 is a porous member through which gas and/or fluid pass. A porous support of blub metal is preferable for the support 1 because the electrode 100 is used, for example, an anode of an electrochemical cell. It is preferable that the support 1 includes fibers and the support 1 consists of the fibers. A porous support containing one or more metals selected from the group consisting of titanium (Ti), aluminum (Al), tantalum (Ta), niobium (Nb), hafnium (Hf), zirconium (Zr), zinc (Zn), tungsten (W), bismuth (Bi), and antimony (Sb) or a porous support consisting of one kind of metals selected from consisting of titanium (Ti), aluminum (Al), tantalum (Ta), niobium (Nb), hafnium (Hf), zirconium (Zr), zinc (Zn), tungsten (W), bismuth (Bi), and antimony (Sb) is preferable for the porous support of valve metal.

It is preferable that the valve metal of the support 1 is Ti which has high durability. For example, a Ti mesh, a Ti cloth, or a sintered body of Ti is preferable for the support 1. When movability of materials is considered, a porosity rate of the support 1 is preferably 20 [%] or more and 95[%] or less and more preferably 40 [%] or more and 90 [%] or less. When, for example, a metal woven cloth with intertwined metal fibers is used as the support 1, a diameter of fibers of the support 1 is preferably 1 [um] or more and 500 [pm] or less. In view of reactivity and supplying electricity, the diameter of the fibers of the support 1 is more preferably 1 [um] or more and 100 [pm] or less. When the support 1 is sintered particles, particle diameters of the sintered particles are preferably 1 [um] or more and 500 [pm] or less. In view of reactivity and supplying electricity, the particle diameters of the sintered particles are preferably 1 [um] or more and 500 [pm] or less.

A coating layer may be provided on the support 1. When a coating layer having electric conductivity is finely provided, the durability of the electrode 100 can be improved. The coating layer is not particularly limited to a material including one or more metals, a material including one or more oxides, a material including one or more nitrides, ceramics, or carbon. The durability of the electrode 100 can be more improved when the coating layer has a multi-layered structure with layers having different composition or a structure having graded composition.

The catalyst layer 2 includes an oxide of noble metal containing Ir and Ru as a main component and an oxide of non-noble metal. An intermediate layer which is not shown in figures may be provided between the support 1 and the catalyst layer 2.

The sum of the amount of the noble metal per area of the catalyst layer 2 is preferably 0.01 [mg/cm²] or more and 3.0 [mg/cm²] or less and more preferably 0.05 [mg/cm²] or more and 0.5 [mg/cm²] or less. The sum of the amount of them can be analyzed by ICP-MS (Inductively Coupled Plasma Mass Spectrometry).

A porosity rate of the catalyst layer 2 is preferably 10 [%] or more and 90 [%] or less and more preferably 30 [%] or more and 70 [%] or less .

The catalyst layer 2 has a structure that a sheet layer and a gap layer are stacked alternately and repeatedly. The sheet layers and the gap layers are stacked in approximately parallel. Most of the gap layers are cavities, and a protruding part of the sheet layers in the gap layers connects the sheet layers. The sheet layers are connected with pillars existing in the gap layer.

The sheet layer is a layer of aggregated catalyst particles in sheet shape. There are cavities also in the sheet layer. The gap layer is a region existing between the sheet layers and does not have a structure of catalyst particles aligned in regularly.

An average thickness of the sheet layer is preferably 4 [nm] or more and 50 [nm] or less. An average thickness of the gap layer is preferably 4 [nm] or more and 50 [nm] or less. It is preferable that the average thickness of the sheet layer is thicker than the average thickness of the gap layer. Part of the gap layer may be thicker than part of the sheet layer.

The catalyst layer 2 preferably includes the Ir oxide or/and the complex oxide of Ir and Ru, and optionally includes the Ru oxide as a noble metal oxide. The sum of the concentration of Ir and Ru contained in the catalyst layer 2 to one or more noble metal elements contained in the catalyst layer 2 is preferably 90 [wt%] or more and 100 [%] or less.

The catalyst layer 2 preferably includes one or more oxides including one or more non-noble metal elements selected the group consisting of Ni, Co, Mn, Fe, Cu, Al, and Zn as a non-noble metal oxide. The non-noble metal element included in the catalyst layer 2 preferably includes Ni and optionally includes one or more elements selected from the group consisting of Co, Mn, Fe, Cu, Al, and Zn. The sum of the concentration of Ni, Co, and Mn contained in the catalyst layer 2 to one or more non-noble metal elements contained in the catalyst layer 2 is preferably 90 [wt%] or more and 100 [%] or less.

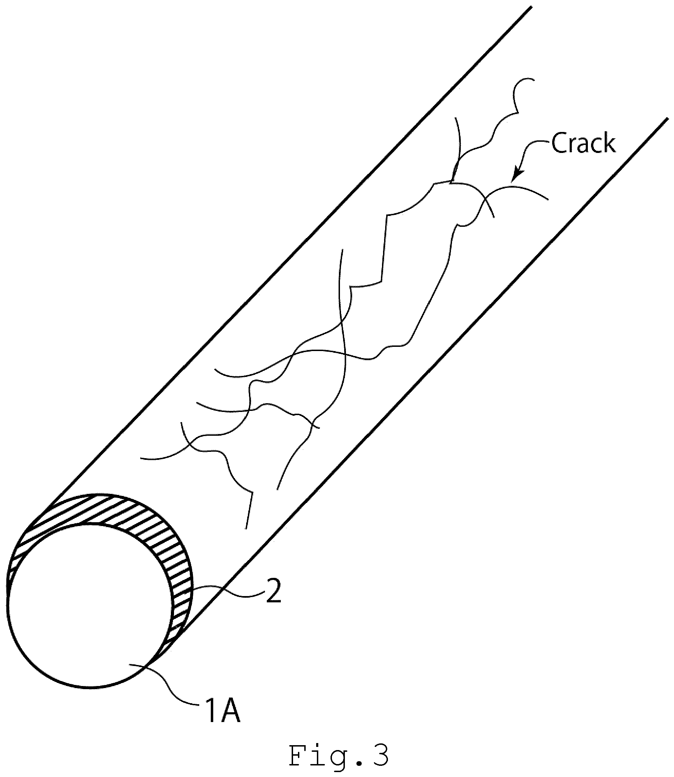

FIG. 3 is a schematic diagram of the electrode 100. FIG. 3 is a magnified schematic diagram of the member that the catalyst layer 2 is provided on the fiber 1A of the support 1. As shown in the schematic diagram of FIG. 3, the electrode 100 of the embodiment includes the catalyst layer 2 which partly covers the fiber 1A of the support 1. Cracks or/and holes exist on a surface of the catalyst layer 2. Cracks and holes preferably exist on a surface of the catalyst layer 2.

As shown in the schematic diagram of FIG. 3, the catalyst layer 2 is provided on the fiber 1A on the catalyst layer 2 side (electrolyte membrane side). As shown in the schematic diagram of FIG. 3, the catalyst layer 2 is non provided on the fiber 1A on a side opposite to the catalyst layer 2 side (electrolyte membrane side).

There is a possibility that the sheet layer 2A prevents moving of materials into inside of the catalyst layer 2 because the catalyst layer 2 includes stacked sheet layers 2A. It is preferable that the catalyst layer 2 according to the embodiment is not an ideal membrane (such as perfect and defect less membrane) and has the cracks or/and the holes. A ratio of the cracks or/and the holes to a surface area of the catalyst layer 2 provided on the fibers 1A is 0.3 [%] or more and 60 [%] or less. When the cracks or/and the holes exist, a catalyst utilization efficiency is increased because materials are easy to move into inside of the catalyst layer 2. The cracks are line-shaped defects formed on the catalyst layer 2. The holes are defects other than the cracks of the catalyst layer 2.

If 20 layers of virtual perfect sheet catalyst layers which have no cracks and holes are stacked, a top layer of them can reacts but rest of layers hardly react. When the sheet layers 2A have cracks, the electrolysis reaction is promoted due to immersing water or the like into the cracks . In view of the above, the ratio of the cracks or/and the holes to a surface area of the catalyst layer 2 provided on the fibers 1A is preferably 1 [%] or more and 50 [%] or less and more preferably 5 [%] or more and 45 [%] or less.

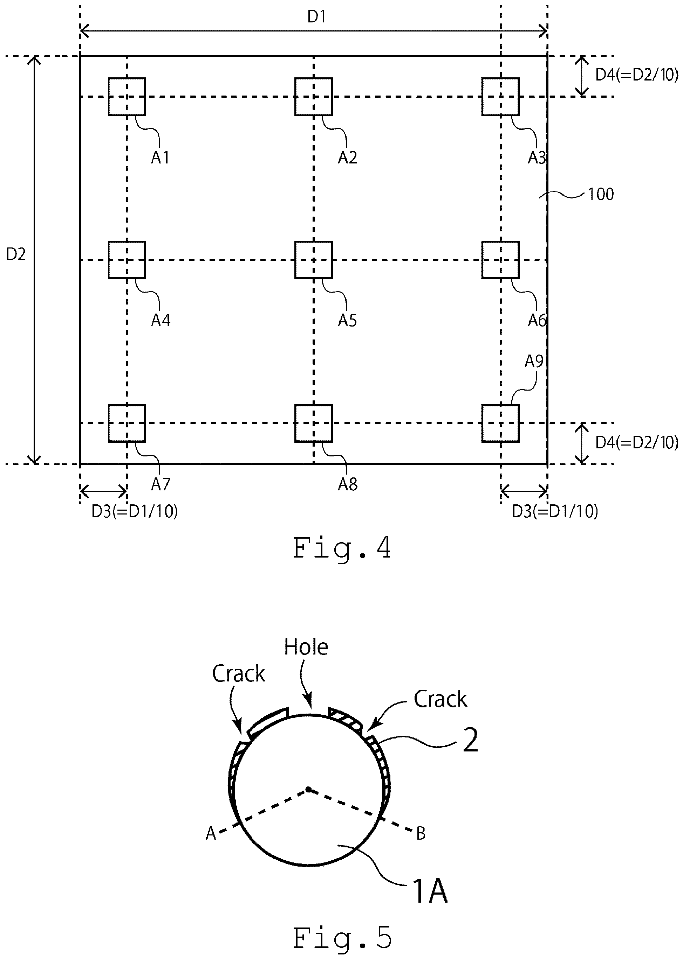

The ratio of the cracks or/and the holes to a surface area of the catalyst layer 2 provided on the fibers 1A can be determined as follows. FIG. 4 shows analysis spots of the support 1. The rate is obtained by observing 9 spots (A1 to A9) on the surface of the the electrode 100.

Each spot has a square region of 1 mm² or more. When a length of the support 1 is denoted by D1 and a width of the support 1 is denoted by D2 (D1 ≥ D2) as shown in FIG. 4, each of the analysis spots A1 to A9 is an area centered on each of the nine intersections of virtual lines, where two of the virtual lines are drawn from both edges facing to the width direction of the support 1 to the respective interior at distance D3 (D3 = D1/10), two of the virtual lines are drawn from both edges facing to the length direction of the support 1 to the respective interior at distance D4 (D4 = D2/10), one of the virtual lines is drawn parallel to the width direction at center of the support 1, and one of the virtual lines is drawn parallel to the length direction at center of the support 1. The observing section of SEM is perpendicular to the surface of FIG. 4.

Five fibers 1A on which the catalyst layer 2 is provided and which are nearest to the center of the cross-sectional image of each of the spots are selected. A fiber whose cross-section is not clearly observed is excluded for the following observation. A length L1 which is a distance between A to B where the catalyst layer 2 is provided on the fiber 1A is determined. A length L2 which is a distance excluding the distance where the cracks or/and the holes are provided on the region between A to B. Each of L2/L1 of the five fibers 1A is calculated, for a total of 45 L2/L1. An average of calculated 45 L2/L1 is regarded as the ratio of the cracks or/and the holes to a surface area of the catalyst layer 2.

FIG. 5 shows a schematic diagram of a member that the catalyst layer 2 is provided on the fiber 1A. The member shown in FIG. 5 has the two cracks and the one hole. First a region where the catalyst layer 2 is provided is observed, and the length L1 (outer circumstance length) which is a distance between A length L1 which is a distance between A to B where the catalyst layer 2 is provided on the fiber 1A is obtained. A length L3 of the fiber 1A where the fiber 1A is open due to the cracks and the hole is obtained, L2 is calculated by L1 - L3 (subtract L3 from L1), and L2/L1 is calculated.

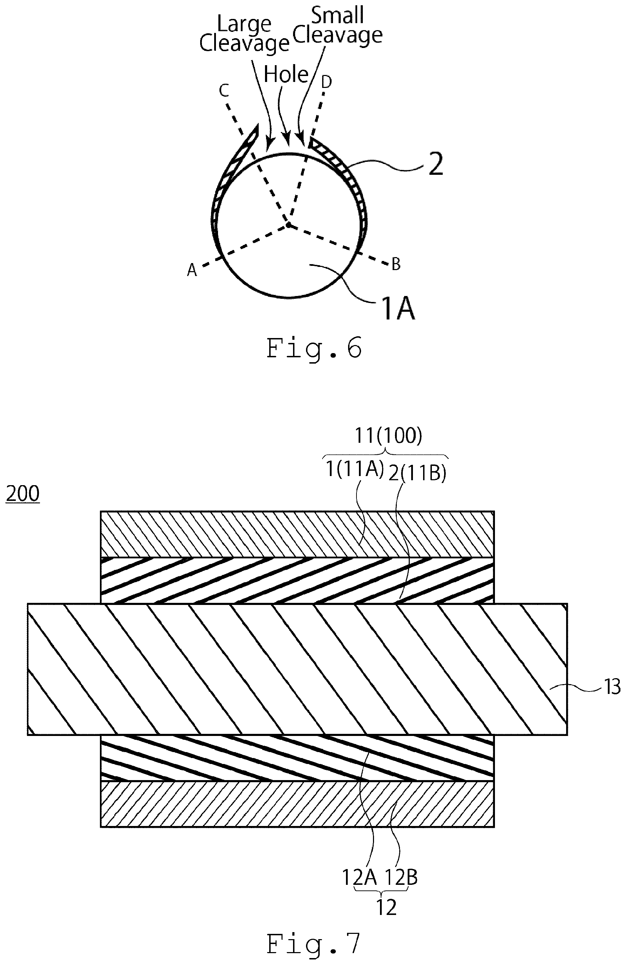

FIG. 6 shows a schematic diagram of a member that the catalyst layer 2 is provided on the fiber 1A. The member shown in FIG. 6 has the one hole. The catalyst layer 2 which presents around the hole is cleaved. First a region where the catalyst layer 2 is provided is observed, and the length L1 (outer circumstance length) between A to B where the catalyst layer 2 is provided on the fiber 1A is obtained. When the extent of the cleavage is small (small cleavage), the region having the cleavage whose extent is small is treated as a region that the catalyst layer 2 is provided on the fiber 1A (not treated as a hole) . A region where the catalyst layer 2 is separated from the surface of the fiber 1A for 5 [pm] or more (large cleavage) is treated as a part of a hole or a crack where the catalyst layer 2 is not provided on the fiber 1A. Then, a length L3 of the fiber 1A from C to D where the fiber 1A is open due to the cracks and the hole is obtained, L2 is calculated by L1 - L3 (subtract L3 from L1), and L2/L1 is calculated.

It is preferable that the one or more cracks exist on the surface of the catalyst layer 2. When the crack exist, catalyst defects is present but a large open area on a cross-section of the catalyst layer 2 is formed. When the length of the crack is long, the catalyst utilization efficiency is increased. It is preferable that the catalyst layer 2 has a crack whose length is 5 times or more of the diameter of the fiber 1A.

The amount of each metal element contained in the catalyst layer 2 can be analyzed by ICP-MS (Inductively Coupled Plasma Mass Spectrometry).

The electrode 100 that the catalyst layer 2 has cracks and/or holes is obtained, for example, the following method. A manufacturing method for electrode 100 that the catalyst layer 2 has cracks and/or holes includes a step of forming a substantial precursor of the sheet layer including a noble metal oxide and a substantial precursor of the gap layer including a non-noble metal oxide alternately, and a step of dissolving the non-noble metal oxide with an acid treatment. After the dissolving with acid, heating process is performed. The heating process is preferably performed in a non-reducing atmosphere (for example in the air). When the heating temperature is too low, the cracks or/and the holes are hardly formed. When the heating temperature is too high, the the catalyst layer 2 is easily removed due to the cleavage of the catalyst layer 2.

### (SECOND EMBODIMENT)

A second embodiment relates to a membrane electrode assembly (MEA). A schematic diagram of a membrane electrode assembly 200 according to the embodiment is shown in FIG. 7. The membrane electrode assembly 200 includes a first electrode 11, a second electrode 12, and an electrolyte membrane 13. The first electrode 11 is an anode electrode preferably.

The second electrode is a cathode electrode preferably. The electrode 100 is preferably used for the first electrode 11. The membrane electrode assembly 200 of embodiments is preferably used for an electrochemical cell or a stack generating hydrogen or oxygen.

It is preferable that the electrode 100 according to the first embodiment including the support 1 and the catalyst layer 2 for the first electrode 11. The catalyst layer 2 of the electrode 100 used for the first electrode 11 is provided on the electrolyte membrane 13 side. The catalyst layer 2 is preferably in direct contact with the electrolyte membrane 13. The electrolyte membrane 13 may be invaded into cracks and/or holes of the catalyst layer 2.

A porous ratio of the first catalyst layer 11B (the catalyst layer 2) is preferably 10 [%] or more and 90[%] or less and more preferably 30 [%] or more and 70 [%] or less. When the amount of metal per area of the first catalyst layer 11B is within the above range and has high porosity and hydrogen which is generated at the cathode (second electrode 12B) passes through the electrolyte membrane 13 and leaks into the anode (the first electrode 11), hydrogen is easily to pass through the first catalyst layer 11B and the first substrate 11A since the first catalyst layer 11B has low density. When leakage measures according to the embodiment are taken, hydrogen leakage can be effectively suppressed even if the first catalyst layer 11B which is easily to leak hydrogen due to the high porous is used. When a catalyst layer which is not easily to leak hydrogen is used for the first catalyst layer 11B, the membrane electrode assembly 200 according to the embodiment can effectively suppress hydrogen leakage.

The second electrode 12 includes a second support 12A and a second catalyst layer 12B. The second catalyst layer 12B is provided on the second support 12A. The second catalyst layer 12B is provided on the electrolyte membrane 13 side. The second catalyst layer 12B is preferably in direct contact with the electrolyte membrane 13.

A porous member having high conductivity is preferable for the second support 12A. The second support 12A is a porous member through which gas and/or fluid pass. The second support 12A is, for example, a carbon paper or a metal mesh. A porous support of blub metal is preferable for the metal mesh. A porous support containing one or more metals selected from the group consisting of titanium (Ti), aluminum (Al), tantalum (Ta), niobium (Nb), hafnium (Hf), zirconium (Zr), zinc (Zn), tungsten (W), bismuth (Bi), and antimony (Sb) or a porous support consisting of one kind of metals selected from consisting of titanium (Ti), aluminum (Al), tantalum (Ta), niobium (Nb), hafnium (Hf), zirconium (Zr), zinc (Zn), tungsten (W), bismuth (Bi), and antimony (Sb). The second support 12A may include a carbon layer (MPL layer) including carbon fine particles and a water-repellent resin (fluororesin such as PTFE and nafion). The carbon layer is provided between, for example, the carbon paper and the second catalyst layer 12B.

The second catalyst layer 12B includes catalyst metal. It is preferable that the second catalyst layer 12B is particles of catalyst metal which is not supported on a carrier. The second catalyst layer 12B is preferably a porous catalyst layer. The catalyst metal of the second catalyst layer 12B is not limited to, for example, one or more metal elements selected from the group consisting of Pt, Rh, OS, Ir, Pd, and Au. The second catalyst layer 12B preferably includes one or more metal elements selected from the catalyst materials. It is preferable that the catalyst metal is metal, alloy, or metal oxide. It is preferable that the second catalyst layer 12B includes catalyst units of a sheet catalyst layer and a gap layer stacked alternately.

The sum of the amount of metal per area of the second catalyst layer 12B is preferably 0.02 [mg/cm²] or more and 1.0 [mg/cm²] or less and more preferably 0.05 [mg/cm²] or more and 0.5 [mg/cm²] or less. The sum of the amount of them can be analyzed by ICP-MS (Inductively Coupled Plasma Mass Spectrometry).

A porosity rate of the second catalyst layer 12B is preferably 10 [%] or more and 90 [%] or less and more preferably 30 [%] or more and 70 [%] or less.

The electrolyte membrane 13 has proton conductivity. As the electrolyte membrane 13, fluorinated polymer having one or more organic groups selected from the group consisting of a sulfonic acid group, a sulfonimide group, and a sulfate group or an aromatic hydrocarbon based polymer is preferable. As the electrolyte membrane 13, the fluorinated polymer having a sulfonic acid group is preferable. NAFION (trademark, DuPont), FLEMION (trademark, Asahi Glass Co., Ltd.), SELEMION (trademark, Asahi Glass Co., Ltd.), Aquivion (trademark, Solvay Specialty Polymers) or Aciplex (trademark, Asahi Kasei Corp.) or the like can be used as the fluorinated polymer having the sulfonic acid group.

A thickness of the electrolyte membrane 13 is chosen appropriately in consideration of a membrane permeability, durability and the like. In view of the strength, anti-solubility, and output characteristics of MEA, the thickness of the electrolyte membrane 13 is preferably 20 [µm] or more and 500 [µm] or less, more preferably 50 [um] or more and 300 [µm] or less, and still more preferably 80 [µm] or more and 200 [µm] or less.

The electrolyte membrane 13 preferably includes a noble metal region on the first electrode 11 side. The noble metal region includes noble metal particles. The noble metal region is preferably present on the surface of the electrolyte membrane 13. The noble metal region preferably consists of one region. The noble metal region may include divided regions.

The noble metal particles are particles including one or more kinds of noble metal elements selected from the group consisting of Pt, Re, Rh, Ir, Pd, and Ru. The noble metal particles may include or optionally include alloy particles containing one or more kinds of noble metal elements selected from the group consisting of Pt, Re, Rh, Ir, Pd, and Ru. It is preferable that the noble metal particles are particles of one kind of noble metal element selected from the group consisting of Pt, Re, Rh, Ir, Pd, and Ru. It is preferable that the noble metal particles are particles of Pt. It is preferable that the noble metal particles are particles of Re. It is preferable that the noble metal particles are particles of Rh. It is preferable that the noble metal particles are particles of Ir. It is preferable that the noble metal particles are particles of Pd. It is preferable that the noble metal particles are particles of Ru.

The noble metal particles oxidize hydrogen which is generated on the cathode side and passes through the electrolyte membrane 13. The noble metal particles reduce leakage of hydrogen. The extracted hydrogen from the cathode side is not easily oxidized because the noble metal particles is provided on the anode side. The region where the noble metal particles are included may be also provided on the second electrode 12 (cathode) side of the electrolyte membrane 13.

An average circumscribed circle diameter of the noble metal particles is preferably 0.5 [nm] or more and 50 [nm] or less, 1.0 [nm] or more and 10 [nm] or less, and still more preferably 1 [nm] or more and 5 [nm] or less.

A long-term operation with high activity becomes available by using the electrode 100 having high durability for the anode of the membrane electrode assembly 200.

### (THIRD EMBODIMENT)

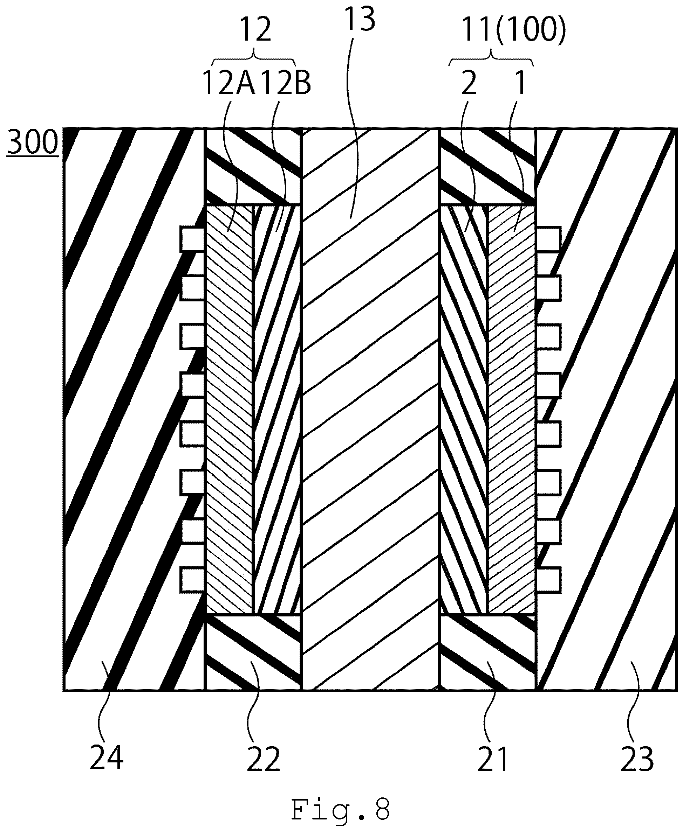

A third embodiment relates to electrochemical cell. A cross-sectional diagram of the electrochemical cell 300 according to the third embodiment is illustrated in FIG. 8. Hereinafter, the electrochemical cell will be described as an example of water electrolysis. Hydrogen is also generated by decomposition of ammonia other than water.

The electrochemical cell 300 according to the third embodiment as illustrated in FIG. 8 includes a first electrode (anode) 11, a second electrode (cathode) 12, an electrolyte membrane 13, a gasket 21, a gasket 22, a separator 23, and a separator 23. A seal member of the first electrode 11 can be used for the gasket 21. A seal member of the second electrode 12 can be used for the gasket 22.

The membrane electrode assembly 200 that the first electrode (anode) 11, the second electrode (cathode) 12, and the electrolyte membrane 13 are bonded is preferably used for the electrochemical cell 300. An anode feeder may be provided separately from the separator 23. A cathode feeder may be provided separately from the separator 24.

In the electrochemical cell 300, a power supply which is not shown in figures is connected to the separator 23 and the separator 24, and reactions occur in the anode 11 and the cathode 12. For, example, water is supplied to the anode 11 and water is decomposed to proton, oxygen, and electron at the anode 11. The support for the electrode and the feeder are porous members, and the porous members function as a passage board. The formed water and un-reacted water are extracted, and proton and electron are used for a cathode reaction. The cathode reaction is that proton and electron react, and hydrogen is formed. The formed hydrogen and/or formed oxygen can be used as a fuel-cell fuel or the other apparatus.

### (FOURTH EMBODIMENT)

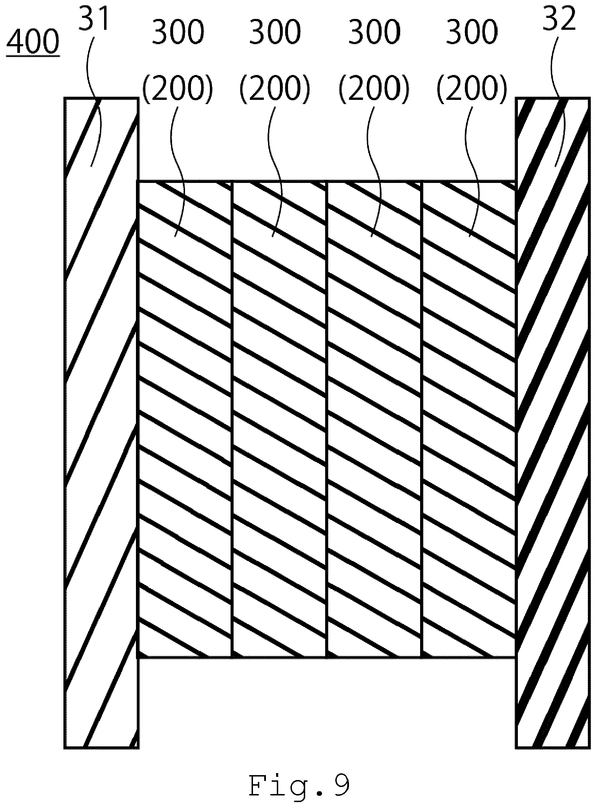

A fourth embodiment relates to a stack. FIG. 9 illustrate a schematic cross-sectional diagram of a stack. The stack 400 according to the fourth embodiment illustrated in FIG. 9 is configured so that two or more of the MEAs 200 or the electrochemical cells 300 are connected in series. Tightening plates 31 and 32 are attached to both ends of the electrochemical cells 300.

The amount of hydrogen generated in the electrochemical cell 300 composed of a single MEA 200 is small. Therefore, a large amount of hydrogen can be obtained by structuring the stack 400 in which two or more of the electrochemical cells are connected in series.

### (FIFTH EMBODIMENT)

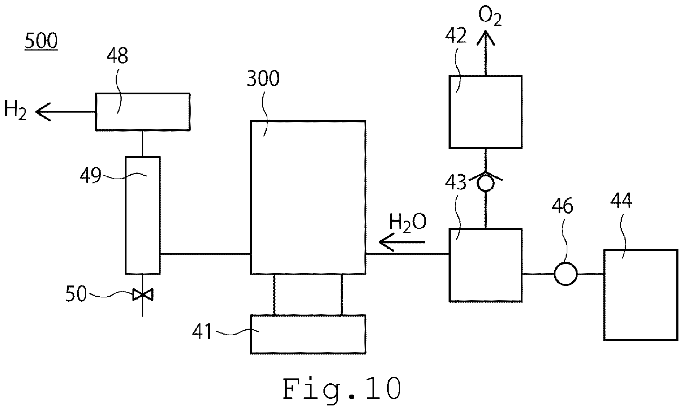

A fifth embodiment relates to an electrolyzer. FIG. 10 illustrates a conceptual diagram of the electrolyzer according to the fifth embodiment. The electrolyzer 500 uses the electrochemical cell 300 or the stack 400. The electrolyzer of FIG. 10 is used for water decomposition. The following is an explanation of an electrolyzer using a water electrolyzer as an example. For example, when hydrogen is generated from ammonia, an apparatus having the other structure using the electrode 100.

As shown in FIG. 10, water electrolysis cells stacked in series are used as the stack 400 for water electrolysis. A power supply 41 is attached to the stack 400, and voltage is applied between the anode and the cathode. A gas-liquid separator 42 for separating generated gas and unreacted water and a mixing tank 43 are connected to the anode side of the stack 400 for water electrolysis and water is sent to the mixing tank 43 by a pump 46 from an ion exchanged water producing apparatus 44 that supplies water for mixing in the mixing tank 43, and water is circulated to the anode mixed in the mixing tank 43 through a check valve 47 from the gas-liquid separator 42. Oxygen generated in the anode passes through the gas-liquid separator 42 so that an oxygen gas is obtained. On the other hand, a hydrogen purification device 49 is connected to the cathode side subsequent to a gas-liquid separator 48 to obtain high purity hydrogen. Impurities are discharged via a path having a valve 50 connected to the hydrogen purification device 49. In order to control the operating temperature stably, it is possible to control the heating of the stack and a mixing tank, the current density during thermal decomposition, and the like.

Hereinafter, examples of the embodiment will be described.

### (Example A)

A 200 [um] thick of a titanium un-woven fabric substrate with a size of 25 [cm] × 25 [cm] is used as the support 1. A precursor of a sheet layer is formed by sputtering iridium on the titanium support. Next a precursor of a gap layer is formed by sputtering only Ni. The forming step of the sheet layer and the forming step of the gap layer are repeated for 22 times, and a laminated structure is obtained so that Ir amount per area is 0.2 [mg/cm²]. The forming conditions of the sheet layer and the gap layer are shown in Table 1 and Table 2. After the sputtering, the sputtered member is washed with sulfuric acid to obtain a laminated structure that the Ni oxide is partly eluted. After the acid treatment, a heating treatment is performed under the temperature condition shown in table 3. After the acid treatment, most of the precursor of the sheet layers becomes the sheet layers and most of the precursor of the gap layer becomes the gap layers.

**[Table 1]**

| | Conditions for Precursor of Sheet Layer | | | |
|---|---|---|---|---|
| | Thickness [nm] | Ir | | Partial Pressure of Oxygen |
| | | DC Output Power [W] | Time[sec] | |
| Example A-1 | 20 | 200 | 180 | High |
| Example A-2 | 20 | 200 | 180 | High |
| Example A-3 | 20 | 200 | 180 | High |
| Example A-4 | 20 | 200 | 180 | High |
| | | | | |
| Comparative Example A-1 | 20 | 200 | 180 | High |
| Comparative Example A-2 | 20 | 200 | 180 | High |
| Comparative Example A-3 | 20 | 200 | 180 | Low |
| Comparative Example A-4 | 20 | 200 | 180 | Low |

**[Table 2]**

| | Precursor of Gap Layer | | |
|---|---|---|---|
| | Thickness [nm] | Ni | |
| | | RF Ourput Power[W] | Time[sec] |
| Example A-1 | 15 | 500 | 230 |
| Example A-2 | 15 | 500 | 230 |
| Example A-3 | 15 | 500 | 230 |
| Example A-4 | 15 | 500 | 230 |
| | | | |
| Comparative Example A-1 | 15 | 500 | 230 |
| Comparative Example A-2 | 15 | 500 | 230 |
| Comparative Example A-3 | 15 | 500 | 230 |
| Comparative Example A-4 | 15 | 500 | 230 |

**[Table 3]**

| | Heating Treatment |
|---|---|
| Example A-1 | with Heating |
| Example A-2 | with Heating |
| Example A-3 | with Heating |
| Example A-4 | with Heating |
| | |
| Comparative Example A-1 | without Heating |
| Comparative Example A-2 | with Heating (High Temperature) |
| Comparative Example A-3 | with Heating |
| Comparative Example A-4 | with Heating |

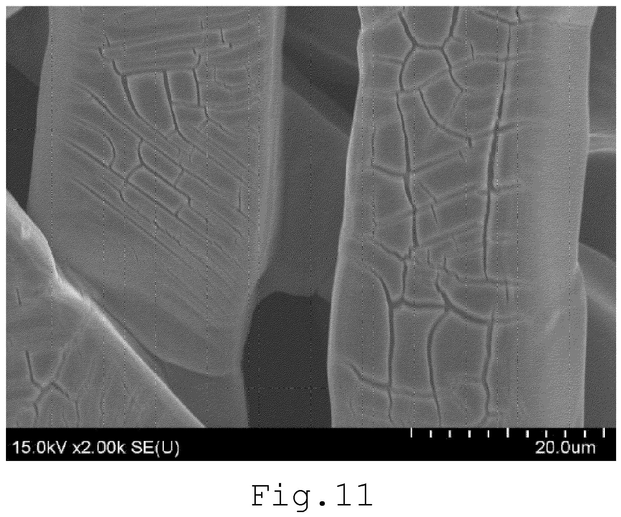

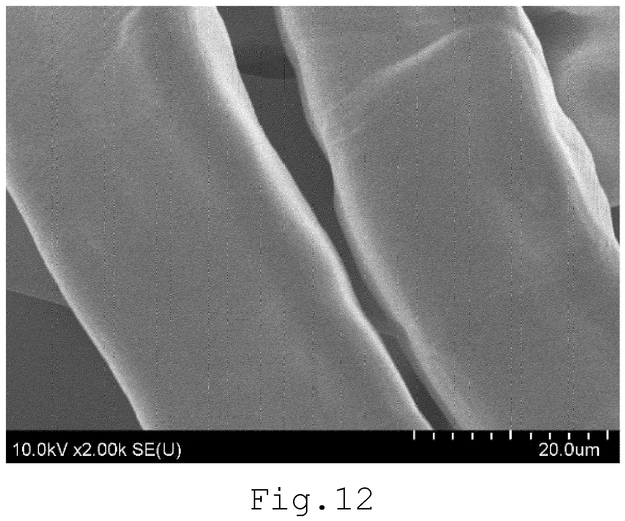

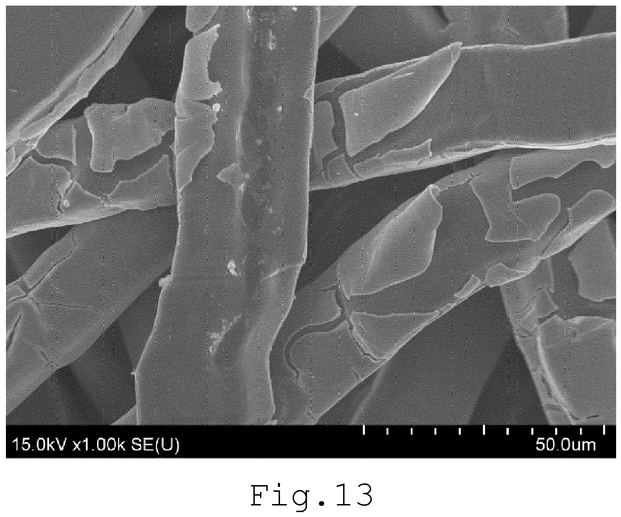

A SEM image of the electrode 100 of Example A-1 is shown in FIG. 11. A SEM image of the electrode 100 of Comparative Example A-1 is shown in FIG. 12. A SEM image of the electrode 100 of Comparative Example A-2 is shown in FIG. 13. When appropriate heating treatment is performed, the cracks are formed, and the electrolysis reaction is promoted due to immersing water or the like into the cracks. Flat surfaces of the catalyst layer 2 of the electrode 100 of Comparative Example A-1 because the heating treatment is not performed in Comparative Example A-1. The catalyst layer of Comparative Example A-1 that the heating treatment is not performed has a low utilization efficiency compared to that of the Example. The catalyst layer 2 is peeled off because the heating temperature of Comparative Example A-2 is too high, and a water electrolysis efficiency is deteriorated.

### Manufacturing Cathode (second electrode 12)

A carbon paper (Toray060 manufactured by Toray Industries, Inc.) with a size of 25 [cm] × 25 [cm] having 190 [um] thick of a MPL layer is prepared for a support of a cathode. A catalyst layer having a laminated structure including gap layers formed by sputtering is formed on the support so that the loading density of Pt becomes 0.1 [mg / cm²] to obtain an electrode having porous catalyst layer. This electrode is used as the standard cathode of Examples and Comparative Examples.

Nafion115 manufactured by Chemours Company with a size of 30 [cm] × 30 [cm] is used as an electrolyte membrane, the electrolyte membrane is sandwiched between the anode and the cathode, and hot pressing is performed. The sandwiched member is set in a hot pressing apparatus, pressing is performed at 160 [°C] and 20 [kg/cm₂] for 3 minutes, and additional pressing is performed at 25 [°C] and 20 [kg/cm₂] for 3 minutes to obtain MEA.

### <Manufacturing Single Cell>

The obtained MEA 200 is set between two separators having flow passage to produce a PEEC single cell (electrochemical cell). Additionally, a back pressure valve is attached on the exit of the separators having flow passage on hydrogen side, and internal pressure can be increased.

Next, the anodes of Example A and Comparative Example A is evaluated. The obtained single cell is conditioned for one day. Thereafter, the single cell is maintained at 60 [°C] and 0.05 [L/min] of ultra-pure water is supplied to the anode. The cell voltage (VC) is measured after operating 48 hours with applying current between the anode and the cathode using a power supply at a current density of 2 [A / cm²]. Table 4 shows the cell voltage (VC).

**[Table 4]**

| | Cell Voltage [V] |
|---|---|
| Example A-1 | 1.832 |
| Example A-2 | 1.816 |
| Example A-3 | 1.861 |
| Example A-4 | 1,895 |
| | |
| Comparative Example A-1 | 2.835 |
| Comparative Example A-2 | 2.040 |
| Comparative Example A-3 | 1.947 |
| Comparative Example A-4 | 1.962 |

### (Example B)

The anode is manufactured as same as conditions excluding the heating treatment as shown in table 5, and the MEA is manufactured by as same as method of Example A. The amount of charge of the MEA was measured by cyclic voltammetry. The measurement of the cyclic voltammetry is performed where voltage range is between 0.2 [V] to 1.2 [V], a scanning speed is 50 [mV/sec], and number of cycles is 10. The total area of the cyclic voltammogram of 10th cycle is calculated. The total area is regarded as the amount of charge of the catalyst layer. The amount of charge is shown in table 6.

**[Table 5]**

| | Heating Treatment |
|---|---|
| Example B-1 | with Heating |
| Example B-2 | with Heating |
| Example B-3 | with Heating |
| Example B-4 | with Heating |
| | |
| Comparative Example B-1 | without Heating |
| Comparative Example 8-2 | with Heating (High Temperature) |
| Comparative Example B-3 | with Heating |
| Comparative Example B-4 | with Heating |

**[Table 6]**

| | Amount of Charge [mC] |
|---|---|
| Example B-1 | 583 |
| Example B-2 | 766 |
| Example B-3 | 486 |
| Example B-4 | 430 |
| | |
| Comparative Example B-1 | 102 |
| Comparative Example B-2 | 152 |
| Comparative Example B-3 | 264 |
| Comparative Example B-4 | 182 |

Some elements are expressed only by element symbols thereof.

Hereinafter, clauses of embodiments are additionally noted.
Clause 1. An electrode comprising:
   a support; and
   a catalyst layer including a sheet layer and a gap layer stacked alternately, wherein
   cracks or/and holes exist in the catalyst layer.
Clause 2. The electrode according to clause 1, wherein
   the support includes fibers,
   the catalyst layer is provided on the fibers, and
   a ratio of the cracks or/and the holes to a surface area of the catalyst layer provided on the fibers is 0.3 [%] or more and 60 [%] or less. Clause 3. The electrode according to clause 1 or 2, wherein
   the support includes fibers,
   the catalyst layer is provided on the fibers, and
   a ratio of the cracks or/and the holes to a surface area of the catalyst layer provided on the fibers is 1 [%] or more and 60 [%] or less.
Clause 4. The electrode according to any one of clauses 1 to 3, wherein
   the support includes fibers,
   the catalyst layer is provided on the fibers, and
   a ratio of the cracks or/and the holes to a surface area of the catalyst layer provided on the fibers is 5 [%] or more and 45 [%] or less.
Clause 5. A membrane electrolyte assembly comprising:
   the electrode according to any one of clauses 1 to 4; and
   an electrolyte membrane.
Clause 6. The membrane electrolyte assembly according to clause 5 wherein the electrolyte membrane is invaded into the the cracks or/and the holes.
Clause 7. An electrochemical cell comprising:
   the membrane electrolyte assembly according to clause 5 or 6.
Clause 8. A stack comprising:
   the membrane electrolyte assembly according to clause 5 or 6.
Clause 9. A stack comprising:
   the electrochemical cell according to clause 7.
Clause 10. An electrolyzer comprising:
   the stack according to clause 8.
Clause 11 An electrolyzer comprising:
   the stack according to clause 9.

While certain embodiments have been described, these embodiments have been presented by way of example only, and are not intended to limit the scope of the inventions. Indeed, the novel embodiments described herein, for example, PEMEC as a water electrolysis cell may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electrode comprising:
a support; and
a catalyst layer including a sheet layer and a gap layer stacked alternately, wherein
cracks or/and holes exist in the catalyst layer.

2. The electrode according to claim 1, wherein
the support includes fibers,
the catalyst layer is provided on the fibers, and
a ratio of the cracks or/and the holes to a surface area of the catalyst layer provided on the fibers is 0.3 [%] or more and 60 [%] or less.

3. The electrode according to claim 1 or 2, wherein
the support includes fibers,
the catalyst layer is provided on the fibers, and
a ratio of the cracks or/and the holes to a surface area of the catalyst layer provided on the fibers is 1 [%] or more and 60 [%] or less.

4. The electrode according to any one of claims 1 to 3, wherein
the support includes fibers,
the catalyst layer is provided on the fibers, and
a ratio of the cracks or/and the holes to a surface area of the catalyst layer provided on the fibers is 5 [%] or more and 45 [%] or less.

5. A membrane electrolyte assembly comprising:
the electrode according to any one of claims 1 to 4; and
an electrolyte membrane.

6. The membrane electrolyte assembly according to claim 5 wherein the electrolyte membrane is invaded into the the cracks or/and the holes.

7. An electrochemical cell comprising:
the membrane electrolyte assembly according to claim 5 or 6.

8. A stack comprising:
the membrane electrolyte assembly according to claim 5 or 6.

9. A stack comprising:
the electrochemical cell according to claim 7.

10. An electrolyzer comprising:
the stack according to claim 8.

11. An electrolyzer comprising:
the stack according to claim 9.
